(19) Europäisches Patentamt
European Patent Office
Office européen des brevets

(11) **EP 0 793 115 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.7: **G01S 7/481**, G01S 17/10, G01S 7/486

(21) Anmeldenummer: **97101154.9**

(22) Anmeldetag: **24.01.1997**

(54) **Laser-Radar-Abtaster mit Millimeter-Auflösung**

Laser radar scanner with millimeter resolution

Radar à laser à résolution millimétrique

(84) Benannte Vertragsstaaten:
**BE CH DE ES FR GB IT LI NL**

(30) Priorität: **27.02.1996 DE 19607345**

(43) Veröffentlichungstag der Anmeldung:
**03.09.1997 Patentblatt 1997/36**

(73) Patentinhaber: **SICK AG**
**79183 Waldkirch (DE)**

(72) Erfinder: **Wetteborn, Hainer**
**79183 Waldkirch (DE)**

(74) Vertreter: **Finsterwald, Martin, Dr. et al**
**Manitz, Finsterwald & Partner GbR**
**Martin-Greif-Strasse 1**
**80336 München (DE)**

(56) Entgegenhaltungen:
DE-A- 2 607 187     DE-A- 4 108 376
DE-A- 4 305 011     DE-A- 4 340 756
DE-A- 4 406 865     DE-A- 19 531 632
US-A- 4 111 552     US-A- 4 743 856
US-A- 4 939 476     US-A- 5 286 969
US-A- 5 291 262

• PATENT ABSTRACTS OF JAPAN vol. 015, no. 251 (P-1220), 26.Juni 1991 & JP 03 081687 A (NEC CORP), 8.April 1991,

## Beschreibung

Die Erfindung betrifft eine Laserabstandsermittlungsvorrichtung mit einem Impulslaser, einer Lichtablenkeinrichtung, einer einen optoelektronischen Photoempfänger aufweisenden Photoempfangsanordnung und einer Steuer- und Auswerteelektronik, wobei der Impulslaser gesteuert Lichtimpulse aussendet und die aufeinanderfolgend ausgesendeten Lichtimpulse über die Lichtablenkeinrichtung unter sich verändernden Winkeln in einen Meßbereich gelenkt werden, von einem im Meßbereich befindlichen Objekt zurückgeworfene Lichtimpulse von der Photoempfangsanordnung empfangen werden und in der Steuerund Auswerteelektronik nach dem Impulslaufzeitverfahren aus der Zeit zwischen dem Aussenden und dem Empfang eines Lichtimpulses unter Berücksichtigung der Lichtgeschwindigkeit ein für den Abstand des Objektes von der Lichtablenkeinrichtung repräsentatives Abtastsignal ermittelt sowie eine Kompensation von aufgrund der Signaldynamik auftretenden Laufzeitmeßfehlern durchgeführt wird.

Eine derartige Laserabstandsermittlungsvorrichtung ist aus der DE 43 40 756 A1 bekannt. Mit einem solchen Laserradar kann nicht nur der Abstand der von den Lichtimpulsen getroffenen Objekten, sondern insbesondere auch der Winkel bestimmt werden, unter dem das Objekt bezüglich einer vorgebbaren Bezugsrichtung im Raum angeordnet ist. Der Objektabstand wird ausgehend von der gemessenen Impulslaufzeit unter Berücksichtigung der Lichtgeschwindigkeit bestimmt. Dabei ist die Genauigkeit dieser Abstandsermittlung im wesentlichen von den drei folgenden Einflußgrößen abhängig:

a) der Auflösung der der Steuer- und Auswerteelektronik zugeordneten Zeitmeßeinheit,
b) dem dem Empfangssignal überlagerten Rauschen und
c) der Genauigkeit der ebenfalls in der Steuer- und Auswerteelektronik erfolgenden Kompensation von aufgrund der Signaldynamik auftretenden Laufzeitmeßfehlern.

Aus den beiden ersten Einflußgrößen a) und b) ergibt sich ein statistischer Meßfehler, der durch Mittelwertbildung über mehrere Messungen reduziert werden kann. Kritischer ist die dritte Einflußgröße c), was in erster Linie darauf zurückzuführen ist, daß der lineare Verstärkungsbereich des dem optoelektronischen Photoempfänger in der Regel nachgeschalteten Vorverstärkers im Vergleich mit der in der Praxis auftretenden Signaldynamik begrenzt ist. Entsprechend führt die beim aus der DE 43 40 756 A1 bekannten Laserradar vorgenommene Kompensation der aufgrund der Signaldynamik auftretenden Laufzeitmeßfehler in Abhängigkeit von dem gemessenen Spitzenwert des empfangenen Lichtimpulses auf der Basis entsprechend ermittelter Korrekturwerte nur in einem relativ kleinen Aussteuerungsbereich zum gewünschten Ergebnis. Erfolgt dagegen eine Aussteuerung des Vorverstärkers über dessen linearen Verstärkungsbereich hinaus, so treten Übersteuerungseffekte auf, die insbesondere eine verlängerte Zeitdauer des Ausgangssignals des Vorverstärkers mit sich bringen können. Dies kann zu Laufzeitmeßfehlern führen, die durch die Spitzenwertdetektion nicht mehr kompensiert werden können, was insbesondere dann der Fall sein kann, wenn auch die abfallende bzw. die am Ende des Ausgangssignals auftretende Flanke mit zur Laufzeitbestimmung herangezogen wird. Hinzu kommt, daß diese Effekte stark temperatur-, spannungs- und chargenabhängig sind.

Ziel der Erfindung ist es, eine Laserabstandsermittlungsvorrichtung der eingangs genannten Art zu schaffen, bei der auf einfache Weise eine stets zuverlässige Kompensation der aufgrund der Signaldynamik auftretenden Laufzeitmeßfehler gewährleistet ist, wobei insbesondere auch den unterschiedlichen Betriebsbedingungen und unterschiedlichen Reflektivitäten des jeweiligen Objekts Rechnung getragen werden soll.

Die Aufgabe wird nach der Erfindung durch die kennzeichnenden Merkmale des Anspruchs 1 gelöst

Mit der Verwendung eines unterschiedliche Reflektivitäten aufweisenden Referenzobjekts können auf einfachste Weise sämtliche in der Praxis in Verbindung mit den jeweiligen Objekten auftretenden Reflektivitäten berücksichtigt und die entsprechenden Korrekturwerte ermittelt werden. Nachdem der Abstand des Referenzobjekts von der Lichtablenkeinrichtung bekannt ist, ist auch die jeweilige Sollaufzeit bekannt. Die Abweichung zwischen der tatsächlich gemessenen Impulslaufzeit und dieser Sollaufzeit kann dann als Maß für den betreffenden Korrekturwert oder zum Bilden einer entsprechenden Korrekturfunktion herangezogen werden. Die Zuordnung der ermittelten Korrekturwerte bzw. Korrekturfunktionen zu den jeweiligen Reflektivitäten erfolgt dadurch, daß sie den jeweils gemessenen Ladungen bzw. Impulsbreiten zugeordnet werden. Beim Empfang eines von einem im Meßbereich befindlichen Objekt zurückgeworfenen Lichtimpulses sind dann zunächst die während des Empfangs dieses Lichtimpulses insgesamt über den Photoempfänger geflossene elektrische Ladung bzw. die Impulsbreite dieses empfangenen Lichtimpulses zu messen, woraufhin der entsprechende Korrekturwert abgerufen oder die entsprechende Korrekturfunktion aktiviert werden kann. Die Ladungsmessung erfolgt unabhängig von der Laufzeitmessung, d.h. über eine gesonderte Ladungsmeßschaltung, so daß eine mögliche Übersteuerung eines der betreffenden Laufzeitmeßschaltung zugeordneten Vorverstärkers keinen Einfluß auf die Ladungsmessung hat. Dagegen ist es grundsätzlich möglich, die Impulsbreite über die jeweilige Laufzeitmeßschaltung zu bestimmen. Nachdem die Kompensation der aufgrund der Signaldynamik auftretenden Laufzeitmeßfehler nunmehr in Abängigjeit von der gemessenen elektrischen Ladung bzw. Impulsbreite erfolgt, haben eine möglicherweise auftretende Übersteuerung und die damit einhergehenden Sättigungseffekte eines der Laufzeitmeßschaltung zugeordneten Vorverstärkers keinen Einfluß auf diese Kompensation. Ein wesentlicher Vorteil der erfindungsgemäßen Laserabstandsermittlungsvorrichtung ist insbesondere auch darin zu sehen, daß es nicht erforderlich ist, daß eine bestimmte Reflektivität an einer definierten Stelle des Referenzobjekts vorliegt. Dieses Referenzobjekt muß weder kalibriert noch ausgerichtet werden. Möglichen Alterungseffekten kommt keinerlei Bedeutung zu. Es ist lediglich erforderlich, daß das Referenzobjekt in definiertem Abstand von der Lichtablenkeinrichtung angeordnet ist und Reflektivitäten aufweist, die beim praktischen Einsatz auch im zu vermessenden Szenario auftreten.

Das Referenzobjekt ist zweckmäßigerweise außerhalb eines definierten überwachten Abtastwinkelbereichs angeordnet, so daß es auch außerhalb dieses Bereichs vom mit sich kontinuierlich ändernden Winkeln abgelenkten Sende-Impulslichtbündel überstrichen wird. Die Erfassung der jeweiligen Objekte im Abtastwinkelbereich wird somit durch das Referenzobjekt nicht gestört. Das Referenzobjekt kann also auch im Objekt liegen.

Im Falle eines zusammenhängenden Referenzobjekts kann dieses insbesondere eine sich stufenlos ändernde Reflektivität aufweisen, wobei zweckmäßigerweise sämtliche auch im praktischen Einsatz bei den jeweils zu erfassenden Objekten vorkommenden Reflektivitäten auftreten.

Alternativ kann das Referenzobjekt jedoch auch durch eine bestimmte Anzahl von Referenzteilobjekten gebildet sein, deren nacheinander vom Sende-Impulslichtbündel beaufschlagte Flächen unterschiedliche Reflektivitäten aufweisen. In diesem Fall können in der Steuer- und Auswerteelektronik die bezüglich der in gleichem Abstand von der Lichtablenkeinrichtung angeordneten Referenzteilobjekte erhaltenen Meßwerte vorteilhafterweise durch ein geeignetes Polynom miteinander verknüpft werden, so daß die Möglichkeit besteht, Zwischenwerte ggf. über das Polynom zu ermitteln.

Das Referenzobjekt kann vorteilhafterweise vor und/oder während des normalen Betriebs der Vorrichtung abgetastet werden, um die zur Ermittlung der Korrekturwerte erforderlichen Meßwerte zu erhalten. Insbesondere während des Betriebs ist vorzugsweise auch eine wiederholte Abtastung möglich, wodurch die Korrekturwerte stets an die aktuellen Betriebsbedingungen angepaßt werden.

Die Kompensation der aufgrund der Signaldynamik auftretenden Laufzeitmeßfehler erfolgt in in der Steuer- und Auswerteelektronik erst dann in Abhängigkeit von der gemessenen elektrischen Ladung und auf der Basis entsprechend ermittelter Korrekturwerte bzw. Korrekturfunktionen, wenn die gemessene Impulsbreite des empfangenen Lichtimpulses einen bestimmten Grenzwert überschritten hat. Dieser Grenzwert kann vorzugsweise zumindest im wesentlichen gleich dem 2- bis 10-fachen Wert der Impulsbreite des ausgesendeten Lichtimpulses sein. Wird dieser Grenzwert somit überschritten, so ist dies ein Indiz dafür, daß der betreffende Vorverstärker extrem übersteuert ist, so daß nunmehr die Kompensation zweckmäßigerweise in Abhängigkeit von der gemessenen elektrischen Ladung erfolgen kann.

In den Unteransprüchen sind weitere vorteilhafte Ausführungsvarianten der erfindunsgemäßen Laserabstandsermittlungsvorrichtung angegeben.

Die Erfindung wird im folgenden anhand von Ausführungsbeispielen unter Bezugnahme auf die Zeichnung näher erläutert; in dieser zeigen:

Figur 1 in schematischer Ansicht den Grundaufbau eines als Laserradar verwirklichten Laserabstandsermittlungsvorrichtung,

Figur 2 eine schematische Draufsicht auf den Drehspiegel nach Figur 1 und den Abtastwinkelbereich,

Figur 3 ein Signalspannungs-Zeitdiagramm verschieden starker Empfangslichtimpulse,

Figur 4 ein weiteres Signalspannungs-Zeitdiagramm verschieden starker Empfangslichtimpulse, wobei zwei im Linearbereich des betreffenden Vorverstärkers liegenden Signalen ein bei einer Übersteuerung erhaltenes Signal gegenübergestellt ist,

Figur 5 eine Ansicht analog Figur 1 in einer um 90° gedrehten Position des Drehspiegels zur Veranschaulichung der Funktion eines in den Strahlengang eingebrachten Referenzobjekts,

Figur 6 einen die Ladungsmessungsmittel umfassenden Teil der Steuer- und Auswerteelektronik des Laserradars und

Figur 7 eine Korrekturkurve einer Amplitudenkorrektur.

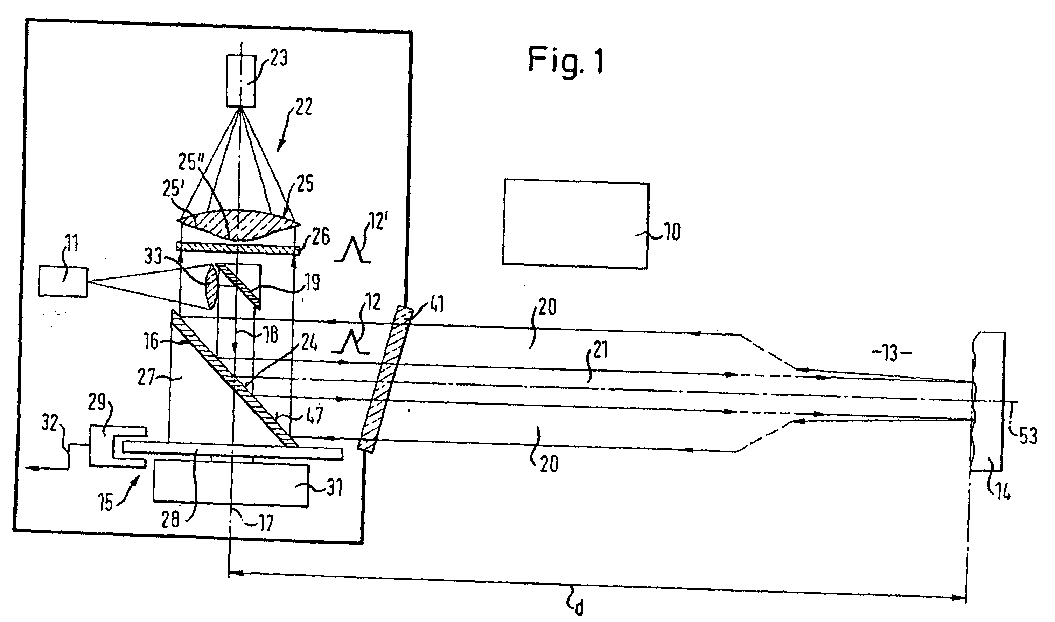

Nach Figur 1 treibt ein Motor 31 einen horizontalen Drehteller 28 zu einer kontinuierlichen Umlaufbewegung um eine vertikale Achse 17 an. Am Umfang des Drehtellers 28 ist ein Winkelgeber 29 vorgesehen, der als Gabellichtschranke ausgebildet ist und über eine Leitung 32 an eine nicht gezeigte Steuerstufe einer Steuer- und Auswerteelektronik 10 angeschlossen ist.

Auf dem Drehteller 28 ist ein Kreiszylinderkörper 27 so angeordnet, daß seine als Drehspiegel 16 ausgebildete obere Stirnfläche unter einem Winkel von 45° zur Drehachse 17 angeordnet ist. Der Drehspiegel 16 kann in nicht dargestellter Weise auch an einer Spiegelplatte ausgebildet sein, die über einen Spiegelträger auf dem Drehteller 28 befestigt ist. Oberhalb des Drehspiegels 16 ist ein wesentlich schmaler ausgebildeter, ebenfalls planer Umlenkspiegel 19 angeordnet, dessen Spiegelfläche einen Winkel von 45° zur Drehachse 17 aufweist und auch als Kreiszylinderkörper verwirklicht sein kann. Auch der Umlenkspiegel 19 kann als ebene Spiegelplatte ausgebildet sein.

Ein zentraler Bereich 24 des Umlenkspiegels 19 empfängt über eine Sendelinse 33 und den Umlenkspiegel 19 Licht eines Impulslasers 11. Das zunächst horizontale Lichtbündel wird am Umlenkspiegel 19 nach unten umgelenkt, um dann vom Drehspiegel 16 in eine horizontale Richtung zu einer Frontscheibe 41 des Laserradars umgelenkt zu werden. Von dort gelangt das Sende-Impulslichtbündel 21 in den Meßbereich 13, in dem beispielsweise ein lichtreflektierendes Objekt 14 angenommen ist, von dem Streulicht als Empfangs-Impulslichtbündel 20 durch die Frontscheibe 41 im Sinne eines Autokollimationsstrahlengangs zurück zum Drehspiegel 16 gelangt.

Das Empfangs-Impulslichtbündel 20 trifft seitlich des zentralen Bereiches 24, auf dem das Sendelicht 21 und insbesondere der Mitteleinfallslichtstrahl 18 auftreffen, auf einen Ringbereich 47 des Drehspiegels 16, um am Umlenkspiegel 19 vorbei zu einem Interferenzfilter 26 reflektiert zu werden, hinter dem eine Empfängerlinse 25 angeordnet ist. Diese Empfängerlinse 25 weist Bereiche 25', 25'' unterschiedlicher Brennweite auf, um auch sehr nahe an dem Laserradar angeordnete Objekte einwandfrei erkennen zu können.

Die Empfängerlinse 25 konzentriert das Empfangslicht auf einen Photoempfänger 23. Sie bildet zusammen mit dem Photoempfänger 23 eine Photoempfangsanordnung 22.

Der Drehspiegel 16, der Drehteller 28 und der Motor 31 sind Teil einer Lichtablenkeinrichtung 15, die die Sende-Impulslichtbündel 21 und Empfangs-Impulslichtbündel 20 um die Drehachse 17 herum rotieren läßt.

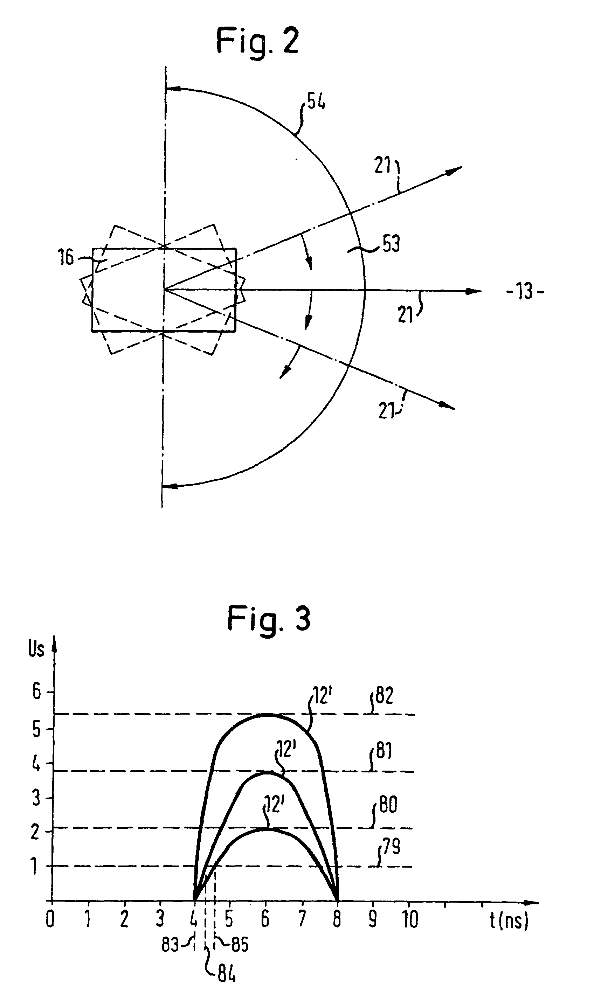

Auf diese Weise kann ein Abtastwinkelbereich von bis zu 360° realisiert werden. Nach Figur 2 erstreckt sich jedoch die Frontscheibe 41 nur über einen Winkel von etwa 180°, was beispielsweise für die Überwachung des vor einem Fahrzeug befindlichen Bereichs ausreichend ist.

In Figur 2 sind außer der Draufsicht nach Figur 1 noch zwei weitere Winkelpositionen des Drehspiegels 16 und des Sende-Impulslichtbündels 21 dargestellt. Das eine Winkelabtastung durchführende Sende-Impulslichtbündel 21 definiert eine Abtastebene 53. Der maximale Abtastwinkelbereich 54 erstreckt sich gemäß der Figur 2 über 180°.

Beim vorliegenden Ausführungsbeispiel wird der Impulslaser 11 durch die Steuer- und Auswerteelektronik 10 zur Abgabe von Lichtimpulsen von einer Dauer von 3 bis 4 Nanosekunden angesteuert. Bei anderen Ausführungsformen kann die Lichtimpulsdauer beispielsweise zwischen 1 und 50 Nanosekunden liegen. Zudem ist auch die Lichtablenkeinrichtung 15 mit der Steuer- und Auswerteelektronik 10 gekoppelt. Sie wird beispielsweise mit einer Drehzahl von 1.500 UpM in Drehung versetzt. Generell kann diese Drehzahl in einem Bereich von insbesondere 500 bis 10.000 UpM liegen. Über die Leitung 32 wird beispielsweise einer der Steuer- und Auswerteelektronik 10 zugeordneten Steuerstufe vom Winkelgeber 29 in jedem Augenblick die Winkelposition der Lichtablenkeinrichtung 15 mitgeteilt.

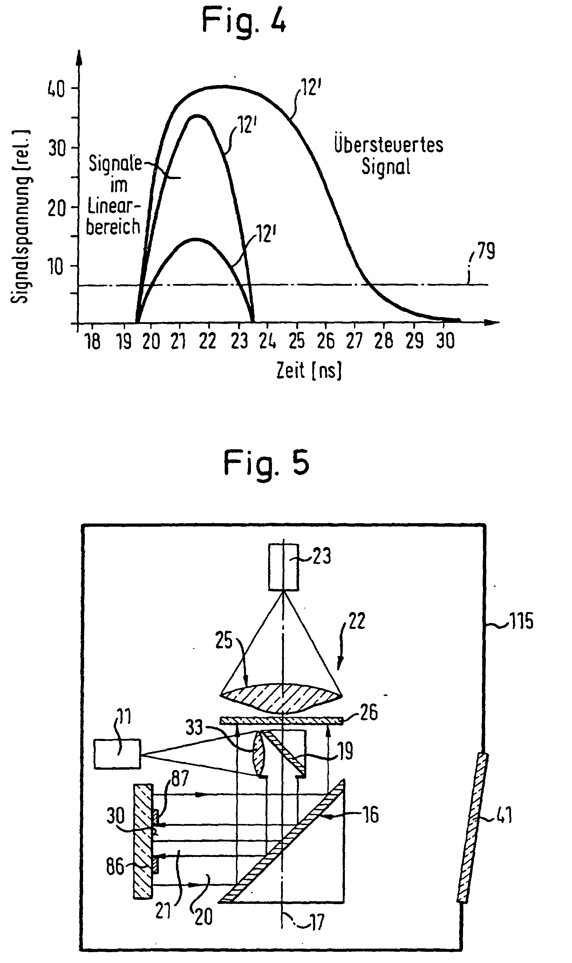

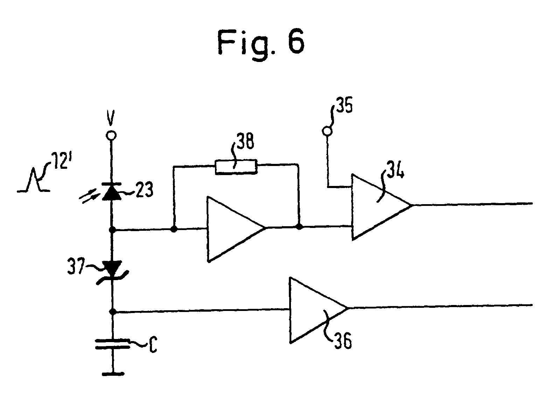

Über die Sendelinse 33 und die Spiegel 19, 16 (vgl. Figur 1 und 5) werden Lichtimpulse 12 in den Meßbereich 13 geschickt. Sie werden nach einer Laufzeit t als Empfangslichtimpulse 12' (vgl. Figur 1) von der Photoempfangsanordnung 22 empfangen. Der im vorliegenden Fall durch eine Photodiode, insbesondere eine Lawinendiode gebildete Photoempfänger 23 (vgl. Figuren 1, 5 und 6) erzeugt daraus ein entsprechendes elektrisches Signal, das durch einen Vorverstärker, beim dargestellten Ausführungsbeispiel einen Transimpedanzverstärker 38 (vgl. Figur 6) verstärkt und anschließend einem Eingang eines Komparators 34 zugeführt wird. Dieser Komparator 34 weist zudem einen eine Detektionsschwelle 79 (vgl. Figuren 3 und 4) definierenden Referenzeingang 35 auf, dessen Ausgangssignal insbesondere zum Messen der Impulsbreite des empfangenen Lichtimpulses 12' und im vorliegenden Fall gleichzeitig zur Laufzeitmessung herangezogen wird. Der Transimpedanzverstärker 28 sowie der Komparator 34 (vgl. Figur 6) sind der Steuer- und Auswerteelektronik 10 (vgl. Figur 1) zugeordnet.

Nach Figur 6 sind zudem Mittel zum Messen der während des Empfangs eines Lichtimpulses 12' insgesamt über den Photoempfänger 23 geflossenen elektrischen Ladung vorgesehen, die einen über eine Schottky-Diode 37 mit dem Photoempfänger 23 in Reihe geschalteten Kondensator C sowie einen diesem nachgeschalteten Pufferverstärker 36 umfassen. Das freie Ende des Kondensators C liegt an Masse, während die Kathode des Photoempfängers 23 zur Erzeugung einer entsprechenden Vorspannung auf einem Potential V liegt.

Diese Mittel C, 36, 37 zum Messen der während des Empfangs eines Lichtimpulses 12' insgesamt über den Photoempfänger 23 geflossenen elektrischen Ladung sind ebenso wie die Mittel 34, 38 zum Messen der Impulsbreite des empfangenen Lichtimpulses 12' bzw. zur Laufzeitmessung Teil der Steuer- und Auswerteelektronik 10 (vgl. Figur 1).

Das Ausgangssignal des Komparators 34 kann beispielsweise an einen von einem Frequenzgenerator getakteten Zähler (nicht gezeigt) der Steuer- und Auswerteelektronik 10 angelegt sein.

Die Steuer- und Auswerteelektronik 10 kann insbesondere auch einen Mikroprozessor umfassen.

Der der Steuer- und Auswerteelektronik 10 zugeordnete, nicht gezeigte Zähler wird beim Aussenden eines jeweiligen Lichtimpulses 12 angestoßen. Sobald von der Photoempfangsanordnung 22 ein entsprechender Lichtimpuls 12' empfangen wird, wird dieser Zähler über das Ausgangssignal des Komperators 34 angehalten. Voraussetzung dafür ist, daß die betreffende Detektionsschwelle 79 (vgl. auch Figuren 3 und 4) überschritten wurde. Das Zählergebnis wird dann anschließend beispielsweise vom Mikroprozessor dazu verwendet, die betreffende Impulslaufzeit t und daraus den Abstand d des Objektes 14 von der Lichtablenkeinrichtung 15 nach der folgenden Formel zu berechnen:

$$d = c.t/2,$$

mit c=Lichtgeschwindigkeit.

Da beispielsweise dem Mikroprozessor der Steuer- und Auswerteelektronik 10 über die Leitung 32 (vgl. Figur 1) auch die momentane Winkelposition der Lichtablenkeinrichung 15 mitgeteilt wird, kann nunmehr eine entsprechende Information über die Polarkoordinaten des Objektes 14 beispielsweise an eine wiederum der Steuer- und Auswerteelektronik 10 zugeordnete Schnittstelle weitergegeben werden, wo sie dann zur weiteren Nutzung beispielsweise als Navigationssignal oder Fehlersignal zur Verfügung steht.

Wie anhand von Figur 5 zu erkennen ist, ist außerhalb des definierten überwachten Abtastwinkelbereichs 54 (vgl. auch Figur 2) ein Referenzobjekt 86 angeordnet, das somit außerhalb dieses überwachten Abtastwinkelbereichs 54 vom mit sich zunehmend ändernden Winkeln abgelenkten Sende-Impulslichtbündel 21 überstrichen wird.

Beim dargestellten Ausführungsbeispiel kann am Rand einer vom Sende-Impulslichtbündel 21 beaufschlagten Fläche 30 des Referenzobjekts 86 eine geschwärzte Ringblende 87 vorgesehen werden, die unerwünschte Streulichteffekte verhindert.

Die vom Sende-Impulslichtbündel 21 beaufschlagte Fläche 30 des außerhalb des definierten überwachten Abtastwinkelbereichs 54 angeordneten Referenzobjekts 86 weist unterschiedliche Reflektivitäten auf. Hierbei erstreckt sich diese Fläche 30 vorzugsweise entlang eines zur Drehachse 17 der drehbaren Lichtablenkeinrichtung 15 konzentrischen Kreisbogens, wobei sich die Reflektivität entlang des Kreisbogens vorzugsweise stufenlos ändert.

Diese Fläche 30 kann durch eine mit hoher Ausgangsreflektivität versehene, zunehmend mit schwarzer Farbe überlackierte Folie, Grundierung oder dergleichen gebildet sein.

Alternativ dazu kann das Referenzobjekt 86 jedoch auch durch eine bestimmte Anzahl von Referenzteilobjektion gebildet sein, die vorzugsweise in gegenseitigem Abstand auf einem zur Drehachse 17 der drehbaren Lichtablenkeinrichtung 15 konzentrischen Kreisbogens liegen, wobei die nacheinander vom Sende- und Impulslichtbündel 21 beaufschlagten Flächen der verschiedenen Referenzteilobjekte unterschiedliche Reflektivitäten aufweisen.

Hierbei können in der Steuer- und Auswerteelektronik 10 die bezüglich der in gleichem Abstand von der Lichtablenkeinrichtung 15 angeordneten Teiltestobjekte erhaltenen Meßwerte durch ein Polynom miteinander verknüpft und Zwischenwerte über das Polynom ermittelt werden.

Nach Figur 5 ist die durch einen Laserradar gebildete Laserabstandermittlungsvorrichtung in einem Gehäuse 115 untergebracht, in dessen unterem Bereich die über 180° gekrümmte Frontscheibe 41 vorgesehen ist.

Wie sich aus den Figuren 3 und 4 ergibt, können aufgrund der Signaldynamik Laufzeitmeßfehler auftreten, die durch die erfindungsgemäße Laserabstandsermittlungsvorrichtung in der noch zu beschreibenden Weise jedoch kompensiert werden.

In Figur 3 sind drei verschiedene über den optoelektronischen Photoempfänger 23 der Photoempfangsanordnung 22 empfangene und über den als Vorverstärker dienenden Transimpedanzverstärker 38 (vgl. Figur 6) verstärkte Lichtimpulse 12' dargestellt. Diese erreichen eine maximale Signalspannung von 80, 81 bzw. 82. Aufgrund eines entsprechend niedrigen Rauschpegels überschreiten zwar sämtliche empfangenen Lichtimpulse 12' die am Referenzeingang 35 des Komparators 34 eingestellte Detektionsschwelle 79. Jedoch ist die Zeit t, nach der die ansteigende Flanke der drei empfangenen unterschiedlichen Lichtimpulse 12' die Detektionsschwelle 79 überschreitet, unterschiedlich. Beim dargestellten Beispiel kann der Zeitunterschied bis zu beispielsweise 1,2 ns betragen, was einem Meßfehler von etwa 20 cm entspricht. Diese Zeitmeßfehler (beispielsweise 84, 85 für die Signale mit den Maximalwerten 80, 81) bezüglich der Basiszeit 83 für den Lichtimpuls 12' mit dem größten Maximalwert 82 können beispielsweise im Mikroprozessor der Steuer- und Auswerteelektronik 10 gespeichert und entsprechend für Korrekturzwecke zur Verfügung gestellt werden.

Solange der Vorverstärker, im vorliegenden Fall der Transimpedanzverstärker 38 (vgl. Figur 6) im linearen Verstärkungsbereich betrieben wird, ist es zwar grundsätzlich möglich, die Kompensation der aufgrund der Signaldynamik auftretenden Laufzeitmeßfehler in Abhängigkeit von den Maximal- oder Spitzenwerten 80, 81, 82 (vgl. Figur 3) vorzunehmen, was beispielsweise mittels eines Spitzenwertdetektors möglich ist.

Wie anhand von Figur 4 zu erkennen ist, ist dies jedoch bei einer Ansteuerung des Vorverstärkers bzw. des Transimpedanzverstärkers 38 über dessen linearen Bereich hinaus zumindest dann nicht mehr ohne weiteres möglich, wenn auch die abfallende Flanke mit zur Laufzeitmessung herangezogen wird. Wie Figur 4 zeigt, führen die mit einer Übersteuerung einhergehenden Sättigungseffekte nämlich dazu, daß das betreffende Ausgangssignal des Vorverstärkers zeitlich gedehnt wird, d.h. die abfallende Flanke zu einem wesentlich späteren Zeitpunkt wieder die Detektionsschwelle 79 unterschreitet (vgl. Figur 4, übersteuertes Signal).

Erfindungsgemäß ist die Steuer- und Auswerteelektronik 10 nun so ausgelegt, daß die Kompensation der aufgrund der Signaldynamik auftretenden Laufzeitmessfehler anhand der bereits beschriebenen Mittel C, 36, 37; 34, 38 zum Messen der während des Empfangs eines Lichtimpulses 12' insgesamt über den Photoempfänger 23 geflossenen elektrischen Ladung bzw. zum Messen der Impulsbreite des empfangenen Lichtimpulses 12' in Abhängigkeit von der gemessenen elektrischen Ladung bzw. Impulsbreite sowie auf der Basis von jeweiligen Korrekturwerten erfolgt, die durch die Steuer- und Auswerteelektronik 10 anhand von Ladungen bzw. Impulsbreiten und Impulslaufzeiten ermittelt werden, die bezüglich des wenigstens einen, in definiertem Abstand von der Lichtablenkeinrichtung 15 angeordneten, unterschiedliche Reflektivitäten aufweisenden Referenzobjekts 86 (vgl. Figur 5) gemessen wurden.

Indem das Referenzobjekt 86 vom Sende-Impulslichtbündel 21 überstrichen wird, wirken nacheinander die unterschiedlichen Reflektivitäten der Fäche 30 des Referenzobjekts 86. Durch die Steuer- und Auswerteelektronik 10 können nun die zur Kompensation erforderlichen Korrekturwerte anhand der Ladungen bzw. Impulsbreiten und Impulslaufzeiten ermittelt werden, die bezüglich des Referenzobjekts 86 gemessen wurden. Nachdem der Abstand des Referenzobjekts 86 zur Lichtablenkeinrichtung 15 bekannt ist, kann ohne weiteres die Sollaufzeit bestimmt werden, mit der dann die tatsächlich gemessenen Impulslaufzeiten verglichen werden können. Die Laufzeitabweichungen können dann als Maß für die jeweiligen Korrekturwerte bzw. Korrekturfunktionen dienen. Die resultierenden Korrekturwerte können beispielsweise in der Steuer- und Auswerteelektronik 10 abgespeichert werden.

Wird dann anschließend im Abtastwinkelbereich 54 (vgl. z.B. Figur 2) ein jeweiliges Objekt 14 (vgl. Figur 1) erfaßt, so werden anhand des empfangenen Lichtimpulses zunächst wiederum die während des Empfangs des Lichtimpulses insgesamt über den Photoempfänger 23 geflossene elektrische Ladung und / oder die Impulsbreite des empfangenen Lichtimpulses gemessen, worauf dann der zugeordnete, zuvor ermittelte Korrekturwert abgerufen bzw. eine entsprechende Korrekturfunktion aktiviert werden kann. Eine möglicherweise auftretende Übersteuerung und damit einhergehende Sättigungseffekte des Vorverstärkers bzw. Transimpedanzverstärkers 38 haben keinerlei Einfluß auf die betreffende Kompensation und damit die Genauigkeit der Abstandsmessung.

Wie bereits erwähnt umfassen die Mittel zum Messen der während des Empfangs eines Lichtimpulses 12' insgesamt über den Photoempfänger 23 geflossenen elektrischen Ladung den über die Schottky-Diode 37 mit dem optoelektronischen Photoempfänger 23 in Reihe geschalteten Kondensator C sowie den diesem nachgeschalteten Pufferverstärker 36 (vgl. Figur 6).

Die Impulsbreiten können beispielsweise mittels eines ebenfalls der Steuer- und Auswertelektronik 10 zugeordneten, nicht gezeigten Zählers gemessen werden, der über das Ausgangssignal des Komparators 34 (vgl. Figur 6) angesteuert wird. Das Ausgangssignal dieses Komparators 34 wird im vorliegenden Fall gleichzeitig zur Laufzeitmessung herangezogen.

Eine höhere Meßgenauigkeit kann unter anderem dadurch erzielt werden, daß die während einer bestimmten Anzahl von Abtastungen bezüglich des Referenzobjekt 86 erhaltenen Meßwerte in der Steuer- und Auswerteelektronik 10 gemittelt werden.

Die Steuer- und Auswerteelektronik 10 ist so ausgelegt, daß die Kompensation der aufgrund der Signaldynamik auftretenden Laufzeitmeßfehler erst dann in Abhängigkeit von der gemessenen elektrischen Ladung und auf der Basis entsprechend ermittelter Korrekturwerte erfolgt, wenn die gemessene Impulsbreite des empfangenen Lichtimpulses 12' einen bestimmten Grenzwert überschritten hat. Dieser Grenzwert kann beispielsweise zumindest im wesentlichen gleich dem Wert der Impulsbreite des ausgesendeten Lichtimpulses 12 sein. Dieser Grenzwert ist somit ein Indiz dafür, daß der Vorverstärker bzw. Transimpedanzverstärker 38 übersteuert wurde (vgl. Figur 4, übersteuertes Signal). Zuvor erfolgt die Kompensation beispielsweise in Abhängigkeit von den jeweils gemessenen Impulsbreiten.

Werden nun Meßungen auf verschiedene Positionen des Referenzobjekts 86 vorgenommen, so können beispielsweise die Ausgangsimpulsbreite im linearen und nichtlinearen Aussteuerungsbereich des Vorverstärkers bzw. die über die Ladungsmessung ermittelte Amplitude gegenüber der mit gegebener Schwelle ermittelten Laufzeit aufgetragen werden.

Da der Abstand des Referenzobjekts 86 von der Lichtablenkeinrichtung 15 bekannt ist, kann damit unmittelbar eine Korrekturfunktion gebildet werden, die auch für Messungen in das äußere Szenario gilt. Zur Verbesserung der Auflösung kann, wie bereits erwähnt, in der Steuer- und Auswerteelektronik 10 eine Mittelwertbildung durchgeführt werden.

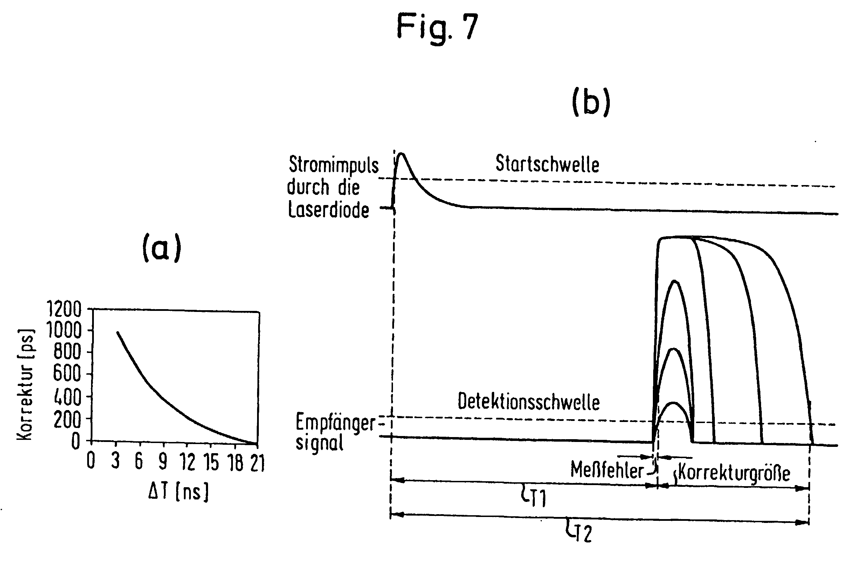

Es wurde bereits angeführt, daß einerseits die Impulsbreite und andererseits die Ladung gemessen werden kann. Anhand von Fig. 7 wird nun ein Beispiel einer in der Steuer- und Auswerteelektronik 10 erfolgenden Signalauswertung beschrieben, bei der zur Kompensation der aufgrund der Signaldynamik auftretenden Laufzeitmeßfehler eine von der gemessenen Impulsbreite des empfangenen Lichtimpulses abhängige Korrektur der gemessenen Entfernung erfolgt. Gemäß dem Diagramm der Fig. 7 b), in dem die Signalamplitude gegenüber der Zeit aufgetragen ist, wird mit T1 die Zeit zwischen dem Aussenden des Lichtimpulses und dem Auftreten der ansteigenden Flanke des empfangenen Lichtimpulses gemessen. Die gemessene Zeit T2 gibt die Zeit zwischen dem Aussenden des Lichtimpulses und dem Auftreten der abfallenden Flanke des empfangenen Lichtimpulses an. Dabei wird eine jeweilige Flanke dadurch erfaßt, daß festgestellt wird, wann sie die Detektionschwelle passiert. Aus den beiden Werten T1, T2 kann dann die Impulsbreite des empfangenen Lichtbündels bestimmt werden, deren Wert gleich T2-T1 oder gleich dem Betrag von T1-T2 ist. Fig. 7 a) zeigt nun ein Korrekturdiagramm, in dem ein in ps angegebener Korrekturwert gegenüber der gemessenen Impulsbreite $\Delta T$ dargestellt ist. Diese Korrekturkurve, die bei einem Wert der gemessenenen Impulsbreite in der Größenordnung von 3 ns beginnt, wird nach der folgenden Beziehung für eine Korrektur der gemessenen Entfernung herangezogen :

$$R = [T1 - \text{Meßfehler}] \times c/2$$

$$= T1 \times c/2 - F(T1 - T2) \times c/2$$

$$= \text{gemessene Entfernung} - \text{Korrektur} (\Delta T),$$

mit

R = korrigierte Entfernung
F = Meßfehler als Funktion der gemessenenen Impulsbreite
$\Delta T$ = gemessene Impulsbreite
c = Lichtgeschwindigkeit

Es ist nicht erforderlich, daß eine bestimmte Reflektivität auf einer definierten Stelle des Referenzojekts 86 liegt. Das Referenzobjekt 86 muß weder kalibriert noch ausgerichtet werden. Alterungseffekte bleiben ohne Einfluß. Die Reflektivitäten der Fläche 30 des Referenzobjekts 86 werden zweckmäßigerweise so gewählt, daß entweder alle im äußeren Szenario vorkommenden Reflektivitäten berücksichtigt oder bestimmte Referenzpunkte gebildet werden, die durch ein Polynom geeigneter Ordnung verknüpft werden, um Zwischenwerte anhand des Polynoms ermitteln zu können.

Damit erfolgt in jedem Fall eine zuverlässige Kompensation der aufgrund der Signaldynamik auftretenden Laufzeitmeßfehler. Es kann ein Szenario mit beliebigen Reflektivitäten ohne systematische Meßfehler abgetastet werden. Bei einer Mittelwertbildung über mehrere Scans lassen sich damit Meßgenauigkeiten bis zu 1mm ereichen.

Das Referenzobjekt kann vor und/oder während des normalen Betriebs des Laserradars abgetastet werden, um die zur Ermittlung der Korrekturwerte erforderlichen Meßwerte zu erhalten. Insbesondere während des Betriebs ist vorzugsweise auch eine wiederholte Abtastung möglich, wodurch die Korrekturwerte stets an die aktuellen Betriebsbedingungen angepaßt werden.

Im übrigen kann die Laserabstandsermittlungsvorrichtung und insbesondere deren Steuer- und Auswerteelektronik so ausgelegt sein, wie dies in der eingangs genannten DE 43 40 756 A1 beschrieben ist.

Bezugszeichenliste

| | |
|---|---|
| 10 | Steuer- und Auswerteelektronik |
| 11 | Impulslaser |
| 12 | gesendete Lichtimpulse |
| 12' | empfangene Lichtimpulse |
| 13 | Meßbereich |
| 14 | Objekt |
| 15 | Lichtablenkeinrichtung |
| 16 | Drehspiegel |
| 17 | Gehäuse |
| 18 | Mitteleinfallslichtstrahl |
| 19 | Umlenkspiegel |
| 20 | Empfangs-Impulslichtbündel |
| 21 | Sende-Impulslichtbündel |
| 22 | Photoempfängeranordnung |
| 23 | optoelektronischer Photoempfänger |
| 24 | zentraler Bereich |
| 25 | Empfängerlinse |
| 25', 25" | Bereiche unterschiedlicher Brennweite |
| 26 | Interferenzfilter |
| 27 | Kreiszylinderkörper |
| 28 | Drehteller |
| 29 | Winkelgeber |
| 30 | Fläche |
| 31 | Motor |
| 32 | Leitung |
| 33 | Sendelinse |
| 34 | Komparator |
| 35 | Referenzeingang |
| 36 | Pufferverstärker |
| 37 | Schottky-Diode |
| 38 | Transimpedanzverstärker |
| 41 | Frontscheibe |
| 47 | Ringbereich |
| 53 | Abtastebene |
| 54 | Abtastwinkelbereich |
| 79 | Detektionsschwelle |
| 80 | Signalspannung |
| 81 | Signalspannung |
| 82 | Signalspannung |
| 83 | Basiszeit |
| 84 | Zeitmeßfehler |
| 85 | Zeitmeßfehler |
| 86 | Referenzobjekt |
| 87 | Ringblende |
| 115 | Gehäuse |
| C | Kondensator |

**Patentansprüche**

1. Laserabstandsermittlungsvorrichtung mit einem Impulslaser (11), einer Lichtablenkeinrichtung (15), einer einen optoelektronischen Photoempfänger (23) aufweisenden Photoempfangsanordnung (22) und einer Steuer- und Auswerteelektronik (10), wobei der Impulslaser (11) gesteuert Lichtimpulse (12) aussendet und die aufeinanderfolgend ausgesendeten Lichtimpulse (12) über die Lichtablenkeinrichtung (15) unter sich verändernden Winkeln in einen Messbereich (13) gelenkt werden, von einem im Messbereich (13) befindlichen Objekt (14) zurückgeworfene Lichtimpulse (12') von der Photoempfangsanordnung (22) empfangen werden und in der Steuer- und Auswerteelektronik (10) nach dem Impulslaufzeitverfahren aus der Zeit zwischen dem Aussenden und dem Empfang eines Lichtimpulses (12,12') unter Berücksichtigung der Lichtgeschwindigkeit ein für den Abstand des Objektes (14) von der Lichtablenkeinrichtung (15) repräsentatives Abtastsignal ermittelt sowie eine Kompensation von aufgrund der Signaldynamik auftretenden Laufzeitmessfehlern durchgeführt wird, **dadurch gekennzeichnet,** **dass** die Steuer- und Auswerteelektronik (10) Mittel (C, 36, 37; 34, 38) zum Messen der während des Empfangs eines Lichtimpulses (12') insgesamt über den Photoempfänger (23) geflossenen elektrischen Ladung und zum Messen der Impulsbreite des empfangenden Lichtimpulses (12') umfasst und dass die Kompensation der aufgrund der Signaldynamik auftretenden Laufzeitmessfehler in Abhängigkeit von der gemessenen elektrischen Ladung bzw. Impulsbreite auf der Basis von jeweiligen Korrekturwerten erfolgt, die durch die Steuer- und Auswerteelektronik (10) anhand von Ladungen bzw. Impulsbreiten und Impulslaufzeiten ermittelt werden, die bezüglich wenigstens eines in definiertem Abstand von der Lichtablenkeinrichtung (15) angeordneten, unterschiedliche Reflektivitäten aufweisenden Referenzobjekts (86) gemessen wurden, wobei die Kompensation der aufgrund der Signaldynamik auftretenden Laufzeitmessfehler in der Steuer- und Auswerteelektronik (10) erst dann in Abhängigkeit von der gemessenen elektrischen Ladung und auf der Basis entsprechend ermittelter Korrekturwerte bzw. Korrekturfunktionen erfolgt, wenn die gemessene Impulsbreite des empfangenen Lichtimpulses (12') einen bestimmten Grenzwert überschritten hat.

2. Vorrichtung nach Anspruch 1, **dadurch gekennzeichnet ,** **daß** das Referenzobjekt (86) außerhalb eines definierten überwachten Abtastwinkelbereichs (54) angeordnet ist und vom mit sich kontinuierlich ändernden Winkeln abgelenkten Sende-Impulslichtbündel (21) überstrichen wird, und/oder daß das Referenzobjekt (86) eine vom Sende-Im pulslichtbündel (21) beaufschlagten Fläche (30) von sich vorzugsweise stufenlos ändernder Reflektivitä auf weist, die sich entlang eines zur Drehachse (17)der drehbaren Lichtablenkeinrichtung (15) konzentrischen Kreisbogens erstreckt, wobei sich die Reflektivität entlang des Kreisbogens ändert, wobei insbesondere die Fläche (30) durch eine mit hoher Ausgangsreflektivität versehene, zunehmend mit schwarzer Farbe überlackierte Folie, Grundierung oder dergleichen gebildet ist.

3. Vorrichtung nach Anspruch 1 oder 2, **dadurch gekennzeichnet ,** **daß** das Referenzobjekt (86) durch eine bestimmte Anzahl von Referenzteilobjekten gebildet ist, die vorzugsweise in gegenseitigem Abstand auf einem zur Drehachse (17) der drehbaren Lichtablenkeinrichtung (15) konzentrischen Kreisbogen liegen, und daß die nacheinander vom Sende-Impulslichtbündel (21) beaufschlagten Flächen der verschiedenen Referenzteilobjekte unterschiedliche Reflektivitäten aufweisen, wobei insbesondere in der Steuer- und Auswerteelektronik (10) die bezüglich der in gleichem Abstand von der Lichtablenkeinrichtung (15) angeordneten Referenzteilobjekte erhaltenen Meßwerte durch ein Polynom miteinander verknüft und Zwischenwerte über das Polynom ermittelt werden.

4. Vorrichtung nach einem der vorhergehenden Ansprüche, **dadurch gekennzeichnet ,** **daß** die Lichtablenkeinrichtung (15) einen 360°-Ablenkwinkel überstreicht und vorzugsweise kontinuierlich in einer Drehrichtung umläuft und/oder daß die Mittel (C, 36, 37) zum Messen der während des Empfangs eines Lichtimpulses (12') insgesamt über den Photoempfänger (23) geflossenen elektrischen Ladung einen mit dem Photoempfänger (23) in Reihe geschalteten Kondensator (C) sowie einen diesem nachgeschalteten Pufferverstärker (36) umfassen, wobei insbesondere der Kondensator (C) über eine Diode, vorzugsweise eine Schottky-Diode (37) mit dem Photoempfänger (23) in Reihe geschaltet ist.

5. Vorrichtung nach einem der vorhergehenden Ansprüche, **dadurch gekennzeichnet ,** **daß** der Photoempfänger (23) über einen Vorverstärker, vorzugsweise einen Transimpedanzverstärker (38) mit einem Eingang eines Komparators (34) verbunden ist, der zudem mit einem eine Detektionsschwelle (79) definierenden Referenzeingang (35) versehen ist und dessen Ausgangssignal insbesondere zum Messen der Impulsbreite des empfangenen Lichtimpulses (12') herangezogen wird, wobei insbesondere das Ausgangssignal des Komparators (34) gleichzeitig zur Laufzeitmessung herangezogen wird.

6. Vorrichtung nach einem der vorhergehenden Ansprüche, **dadurch gekennzeichnet , daß** das Referenzobjekt (86) vor und/oder während des normalen Betriebs der Vorrichtung vorzugsweise wiederholt abgetastet wird, um die zur Ermittlung der Korrekturwerte erforderlichen Meßwerte zu erhalten, und/oder daß während einer bestimmten Anzahl von Abtastungen bezüglich des Referenzobjekts (86) erhaltene Meßwerte zur Verbesserung der Genauigkeit in der Steuerund Auswerteelektronik (10) gemittelt werden.

7. Vorrichtung nach einem der vorhergehenden Ansprüche, **dadurch gekennzeichnet , daß** insbesondere der Grenzwert zumindest im wesentlichen gleich dem Wert der 2- bis 10-fachen, insbesondere der 2- bis 5-fachen Impulsbreite des ausgesendeten Lichtimpulses (12) ist bzw. einem Wert entspricht, bei dem der Vorverstärker stark übersteuert ist.

8. Vorrichtung nach einem der vorhergehenden Ansprüche, **dadurch gekennzeichnet , daß** die Steuer- und Auswerteelektronik (10) zur Bestimmung der Laufzeiten und Impulsbreiten eine Zeitmeßeinheit umfaßt.

9. Vorrichtung nach einem der vorhergehenden Ansprüche, **dadurch gekennzeichnet , daß** die Steuer- und Auswerteelektronik (10) einen Mikroprozessor umfaßt.

10. Vorrichtung nach einem der vorhergehenden Ansprüche, **dadurch gekennzeichnet , daß** der optoelektronische Photoempfänger eine Photodiode, insbesondere eine Lawinendiode (23) ist.

## Claims

1. Laser range finding apparatus comprising a pulsed laser (11), a light deflecting device (15), a photodetector arrangement (22) having an opto-electronic photodetector (23) and an electronic control and evaluation system (10), wherein the pulsed laser (11) transmits light pulses (12) and the sequentially transmitted light pulses (12) are guided via the light deflecting device (15) at changing angles into a measurement region (13), wherein light pulses (12') reflected back from an object (14) located in the measurement region (13) are received by the photodetector arrangement (22), wherein a sensing signal representative for the spacing of the object (14) from the light deflecting device (15) is determined in the electronic control and evaluation system (10) in accordance with the pulse transit time method from the time between the transmission and the reception of a light pulse (12, 12') on taking account of the speed of light, and wherein a compensation is effected for transit time measurement errors arising as a result of the signal dynamics, **characterized in that** the electronic control and evaluation system (10) includes means (C, 36, 37; 34, 38) for measuring the total electrical charge which has flowed via the photodetector (23) during the reception of a light pulse (12') and for measuring the pulse width of the received light pulse (12'); and **in that** the compensation of the transit time errors which occur as a result of the signal dynamics, takes place in dependence on the measured electrical charge and/or the pulse width on the basis of respective correction values determined by the electronic control and evaluation system (10) with reference to charges and/or pulse widths and pulse transit times measured with respect to at least one reference object (86) arranged at a defined distance from the light deflecting device (15) and having different reflectivities, wherein the compensation in the electronic control and evaluation system (10) of the transit time measurement errors which arise as a result of the signal dynamics first takes place in dependence on the measured electrical charge and on the basis of correspondingly derived correction values or correction functions, when the measured pulse width of the received light pulse (12') has exceeded a specific threshold value

2. Apparatus in accordance with claim 1, **characterized in that** the reference object (86) is arranged outside a defined, monitored angular scanning range (54) and is swept over by the transmitted pulsed light beam (21) deflected with continuously changing angles; and/or **in that** the reference object (86) has a surface (30) of changing reflectivity, and preferably steplessly changing reflectivity, which is acted on by the transmitted pulsed light beam (21) and which extends along a circular arc concentric to the axis of rotation (17) of the rotatable light deflecting means (15), whereby the reflectivity changes along the circular arc, wherein in particular the surface (30) is formed by a foil, undercoat or the like of high initial reflectivity, which is increasingly painted over with black paint.

3. Apparatus in accordance with claim 1 or claim 2, **characterized in that** the reference object (86) is formed by a specific number of reference object elements which preferably lie at a mutual spacing on a circular arc concentric to the axis of rotation (17) of the rotatable light deflecting device (15); and **in that** the surfaces of the different reference object elements aced on one after the other by the transmitted pulsed light beam (21) have different reflectivities, wherein in particular the measured values received with respect to the reference object elements arranged at the same spacing from the light deflecting device (15) are linked together in the electronic control and evaluation system (10) by a polynomial and that intermediate values are determined via the polynomial.

4. Apparatus in accordance with any one of the preceding claims,
**characterized in that** the light deflecting device (15) sweeps over a 360° deflection angle and preferably continuously rotates in one direction of rotation; and/or **in that** the means (C, 36, 37) for the measurement of the total electrical charge which has flowed via the photodetector (23) during the reception of one light pulse (12') includes a capacitor (C) connected in series to the photodetector (23) and also a buffer amplifier (36) connected after the capacitor, wherein in particular the capacitor (C) is connected to the photodetector (23) in series via a diode, preferably a Schottky diode (37).

5. Apparatus in accordance with any one of the preceding claims,
**characterized in that** the photodetector (23) is connected via a pre-amplifier, preferably via a transimpedance amplifier (38), to one input of a comparator (34), which is, moreover, provided with a reference input (35) defining a detection threshold (79) and the output signal of which is used in particular for the measurement of the pulse width of the received light pulse (12'), wherein the output signal of the comparator (34) is in particular simultaneously used for the transit time measurement.

6. Apparatus in accordance with any one of the preceding claims,
**characterized in that** the reference object (86) is repeatedly sensed before and/or during the normal operation of the apparatus in order to obtain the measurement values required for the determination of the correction values; and/or **in that** measurement values obtained during a specific number of scans with respect to the reference object (86) are averaged to improve the accuracy in the electronic control and evaluation system (10).

7. Apparatus in accordance with any one of the preceding claims,
**characterized in that** the threshold value is in particular at least substantially the same as the value of two to ten times, and in particular of two to five times, the pulse width of the transmitted light pulse (12), or corresponds to a value at which the pre-amplifier is greatly overmodulated or saturated.

8. Apparatus in accordance with any one of the preceding claims,
**characterized in that** the electronic control and evaluation system (10) includes a time measurement unit for the determination of the transit times and pulse widths.

9. Apparatus in accordance with any one of the preceding claims,
**characterized in that** the electronic control and evaluation system (10) includes a microprocessor.

10. Apparatus in accordance with any one of the preceding claims,
**characterized in that** the opto-electronic photodetector is a photodiode, in particular an avalanche diode (23).

## Revendications

1. Dispositif à laser pour évaluation de distances comprenant un laser à impulsions (11), un mécanisme de déflexion de lumière (15), un dispositif de photo-réception (22) présentant un photorécepteur optoélectronique (23) et une unité électronique d'évaluation et de commande (10), dans lequel :

   - le laser à impulsions (11) envoie de manière commandée des impulsions lumineuses (12) via le mécanisme de déflexion de lumière (15) ; et
   - les impulsions lumineuses (12) envoyées consécutivement sont déviées via le mécanisme de déflexion de lumière (15) sous des angles qui se modifient dans une plage de mesure (13) ;
   - les impulsions lumineuses (12') réfléchies par un objet (14) se trouvant dans la plage de mesure (13) sont captées par le module de photo-réception (22) ; et
   - un signal d'exploration représentatif pour la distance de l'objet (14) depuis le mécanisme de déflexion de lumière (15) est déterminé dans l'unité électronique d'évaluation et de commande (10) selon le procédé du temps de parcours d'impulsion, à partir du temps entre l'envoi et la réception d'une impulsion lumineuse (12, 12'), en tenant compte de la vitesse de la lumière ; et
   - il est exécuté une compensation des erreurs de mesure du temps de parcours se produisant en raison de la dynamique des signaux,

   caractérisé en que :

- l'unité électronique d'évaluation et de commande (10) comporte des moyens (C, 36, 37 ; 34 ; 38) pour mesurer la charge électrique qui s'écoule au total dans le photorécepteur (23) pendant la réception d'une impulsion lumineuse (12') et pour mesurer la largeur d'impulsion de l'impulsion lumineuse (12') ; et
- la compensation des erreurs de mesure du temps de parcours se produisant en raison de la dynamique des signaux a lieu en dépendance de la charge électrique ou largeur d'impulsion mesurée, sur la base de valeurs de correction respectives qui sont déterminées par l'unité électronique d'évaluation et de commande (10) selon les charges ou les largeurs d'impulsion et les temps de parcours d'impulsion qui ont été mesurés par rapport au moins à un objet de référence (86) présentant différentes réflectivités et agencé à une distance définie du mécanisme de déflexion de lumière (15), la compensation des erreurs de mesure du temps de parcours qui se produisent en raison de la dynamique des signaux ayant lieu, dans l'unité électronique d'évaluation et de commande (10), en dépendance de la charge électrique mesurée et sur la base des valeurs de correction ou des fonctions de correction déterminées en conséquence, et cela seulement lorsque la largeur d'impulsion mesurée de l'impulsion lumineuse reçue (12') a dépassé une certaine valeur limite.

2. Dispositif selon la revendication 1, **caractérisé en ce que** :

   - l'objet de référence (86) est agencé en dehors d'une région angulaire d'exploration (54) surveillée et définie, et est balayé par le faisceau lumineux émis par impulsions (21) défléchi sous des angles qui se modifient continuellement ; et/ou
   - l'objet de référence (86) présente une surface (30) attaquée par le faisceau lumineux émis par impulsions (21 ), dont la réflectivité se modifie de préférence progressivement et qui s'étend le long d'un arc de cercle concentrique à l'axe de rotation (17) du mécanisme de déflexion de lumière rotatif (15), la réflectivité se modifiant le long de l'arc de cercle et la surface (30) étant formée par un film, un apprêt ou similaire, muni d'une haute réflectivité initiale et repeint de manière croissante de couleur noire.

3. Dispositif selon l'une ou l'autre des revendications 1 ou 2, **caractérisé en ce que** :

   - l'objet de référence (86) est formé par un certain nombre d'objets partiels de référence qui sont disposés de préférence à une distance réciproque sur un arc de cercle concentrique à l'axe de rotation (17) du mécanisme de déflexion de lumière rotatif (15) ; et

- les surfaces des différents objets partiels de référence, attaquée l'une après l'autre par le faisceau lumineux émis par impulsions (21), présentent différentes réflectivités, les valeurs de mesure obtenues en particulier dans l'unité électronique d'évaluation et de commande (10) en ce qui concerne les objets partiels de référence agencés à la même distance du mécanisme de déflexion de lumière (15) étant chaînées entre elles par un polynôme et des valeurs intermédiaires étant déterminées via le polynôme.

4. Dispositif selon l'une des revendications précédentes, **caractérisé en ce que** :

   - le mécanisme de déflexion de lumière (15) balaie un angle de déflexion de 360° et tourne de préférence continuellement dans un sens de rotation ; et/ou
   - les moyens (C, 36, 37) pour mesurer la charge électrique qui s'écoule au total dans le photorécepteur (23) pendant la réception d'une impulsion lumineuse (12') comportent un condensateur (C) branché en série avec le photorécepteur (23) ainsi qu'un amplificateur tampon (36) branché en aval de celui-ci, ledit condensateur (C) étant branché en série avec le photorécepteur (23) via une diode, de préférence une diode « Schottky » (37).

5. Dispositif selon l'une des revendications précédentes, **caractérisé en ce que** le photorécepteur (23) est relié via un préamplificateur, de préférence un amplificateur de transimpédance (38), à une entrée d'un comparateur (34) qui est muni en outre d'une entrée de référence (35) définissant un seuil de détection (79) et dont le signal de sortie est utilisé en particulier pour mesurer la largeur d'impulsion de l'impulsion lumineuse reçue (12'), le signal de sortie du comparateur (34) servant en particulier simultanément à la mesure du temps de parcours.

6. Dispositif selon l'une des revendications précédentes, **caractérisé en ce que** :

   - l'objet de référence (86) est exploré avant et/ou pendant le fonctionnement normal du dispositif, de préférence de manière répétée, pour obtenir les valeurs de mesure nécessaires à la détermination des valeurs de correction ; et/ou
   - les valeurs de mesure obtenues pendant un certain nombre d'explorations par rapport à l'objet de référence (86) sont moyennées pour améliorer l'exactitude dans l'unité électronique d'évaluation et de commande (10).

7. Dispositif selon l'une des revendications précédentes, **caractérisé en ce que** la valeur limite en particulier est au moins essentiellement égale à la valeur de 2 fois à 10 fois, en particulier 2 fois à 5 fois, la largeur d'impulsion de l'impulsion lumineuse (12) émise ou correspond à une valeur pour laquelle le préamplificateur est fortement saturé.

8. Dispositif selon l'une des revendications précédentes, **caractérisé en ce que** l'unité électronique d'évaluation et de commande (10) comporte une unité de mesure de temps pour déterminer les temps de parcours et les largeurs d'impulsion.

9. Dispositif selon l'une des revendications précédentes, **caractérisé en ce que** l'unité électronique d'évaluation et de commande (10) comporte un microprocesseur.

10. Dispositif selon l'une des revendications précédentes, **caractérisé en ce que** le photorécepteur optoélectronique est une photodiode, en particulier, une diode à avalanche (23).

Fig. 1

# Fig. 2

# Fig. 3

# Fig. 4

# Fig. 5

# Fig. 6

# Fig. 7

**(b)**

**(a)**

EP 0 793 115 B1